Europäisches Patentamt

European Patent Office

Office européen des brevets

(19)

(11) Veröffentlichungsnummer: **0 195 260**
**B1**

# (12) EUROPÄISCHE PATENTSCHRIFT

(45) Veröffentlichungstag der Patentschrift:
19.04.89

(21) Anmeldenummer: 86102093.1

(22) Anmeldetag: 18.02.86

(51) Int. Cl.⁴: **B 23 B 31/12,** B 23 B 51/00

(54) **Bohrfutter und Werkzeug zum drehenden und drehschlagenden Bohren.**

(30) Priorität: 20.03.85 DE 3510068
06.11.85 DE 3539654

(43) Veröffentlichungstag der Anmeldung:
24.09.86 Patentblatt 86/39

(45) Bekanntmachung des Hinweises auf die Patenterteilung:
19.04.89 Patentblatt 89/16

(84) Benannte Vertragsstaaten:
CH FR GB IT LI

(56) Entgegenhaltungen:
DE-A-2 454 261
GB-A-2 103 988
GB-A-2 136 723
US-A-3 558 146

(73) Patentinhaber: **Röhm GmbH, Heinrich- Röhm-Strasse 50, D-7927 Sontheim (DE)**

(72) Erfinder: **Mack, Hans Dieter, Dipl.- Ing. (FH), Richard- Wagner- Strasse 11, D-7927 Sontheim (DE)**

(74) Vertreter: **Fay, Hermann, Dipl.- Phys. Dr., Ensingerstrasse 21 Postfach 1767, D-7900 Ulm (Donau) (DE)**

EP 0 195 260 B1

## Beschreibung

Die Erfindung betrifft ein Bohrfutter für ein Werkzeug zum drehenden und drehschlagenden Bohren, mit mindestens zwei in zur Futterachse schrägen Führungen zentrisch zur Futterachse verstellbaren und in ihren Führungen begrenzt verdrehbaren Spannbacken, deren der Futterachse zugewandte Spannfläche eine der Führung des Werkzeugschaftes an seiner Mantelfläche dienende Führungsfläche und mindestens einen gegen die Futterachse aus der Führungsfläche vorstehenden Vorsprung aufweist, der durch Eingriff in Ausnehmungen am Werkzeugschaft der drehenden Mitnahme und axialen Spielbegrenzung des Werkzeuges dient.

Die Erfindung betrifft auch ein entsprechendes Werkzeug.

Derartige Bohrfutter und Werkzeuge sind beispielsweise aus der DE-A-3 310 146 bekannt. Bei ihnen ist der Vorsprung mittig zu der durch die Futterachse gehenden Mittelebene der Spannbacke angeordnet, so daß die in Umfangsrichtung beidseits des Vorsprungs befindlichen Teile der Führungsfläche von gleicher Breite sind. Die Führungsfläche selbst ist in Form einer Kreiszylinderfläche konkav gewölbt. Das hat zur Folge, daß eine exakte Anlage der Führungsfläche an der zylindrischen Mantelfläche des Werkzeugschaftes nur für Werkzeuge besteht, deren Schaftradius gleich dem Wölbungsradius der Führungsfläche ist. Nur in diesem Fall besteht eine klare Funktionsaufteilung zwischen der Führungsfläche und dem Vorsprung: Der Vorsprung bewirkt die Drehmitnahme, die Führungsfläche die exakte Führung und Zentrierung des Werkzeugs. Ist aber der Schaftradius kleiner als der Wölbungsradius der Führungsfläche, so erfolgt entweder die Drehmitnahme und die Führung des Werkzeugs allein durch den Vorsprung, was mit einer erheblichen Verschlechterung der Führung und Zentrierung des Werkzeugs im Bohrfutter verbunden sein kann, oder die in der Spannbackenführung im Bohrfutter um ihre Führungsachse etwas verdrehbaren Spannbacken werden durch das vom Werkzeugschaft über die in seine Ausnehmungen eingreifenden Vorsprünge auf die Spannbacken ausgeübte Drehmoment soweit in der Spannbackenführung verdreht, bis der in Drehrichtung des Spannfutters dem Vorsprung voranlaufende Teil der Führungsfläche sich mit seiner in dieser Drehrichtung vorderen Begrenzungskante linienhaft gegen die Mantelfläche des Werkzeugschaftes anlegt, wobei dort wegen der nur linienhaften Anlage sehr hohe Berührungskräfte entstehen, die zu entsprechend hoher Reibung zwischen dem Werkzeugschaft und der seiner Mantelfläche aufliegenden Spannbackenkante und zu allen damit verbundenen Nachteilen führt, wie sehr hoher Spannbacken- und Werkzeugverschleiß und stärkere Verklemmung des Werkzeugschaftes in den Spannbacken, wodurch die axiale Beweglichkeit des Werkzeugs im Bohrfutter leidet und entsprechend der Bohrfortschritt erheblich geringer wird.

Der Erfindung liegt die Aufgabe zugrunde, die Spannbacken eines Bohrfutters der eingangs genannten Art und in Anpassung daran auch das Bohrwerkzeug selbst so auszubilden, daß Werkzeuge verschiedenen Schaftdurchmessers unabhängig von der Durchmessergröße in stets gleich guter Weise an den Spannbacken geführt und gehalten sind.

Bezüglich des Bohrfutters wird diese Aufgabe nach der Erfindung dadurch gelöst, daß der Vorsprung entgegen der dem Bohren dienenden Drehrichtung des Spannfutters aus der durch die Futterachse gehenden Mittelebene der Spannbacke versetzt ist, so daß der dem Vorsprung in Drehrichtung voranlaufende Teil der Führungsfläche in Umfangsrichtung des Werkzeugschaftes breiter ist als der dem Vorsprung nachlaufende Führungsflächenteil.

Diese außermittige, in Drehrichtung des Werkzeugs zurückversetzte Anordnung des Vorsprunges ergibt einen entsprechend größeren Abstand zwischen der Anlage des Vorsprungs in der Ausnehmung einerseits und der Anlage der vorderen Spannbackenkante an der Mantelfläche des Werkzeugschaftes andererseits, und im Verhältnis der Vergrößerung dieses Anlageabstands eine entsprechende Verringerung der Anlagekraft der vorderen Spannbackenkante am Werkzeugschaft, so daß im Ganzen die Führung des Werkzeuges verbessert wird und die Werkzeugklemmung im Bohrfutter und der Verschleiß an den Spannbacken und am Werkzeugschaft wesentlich geringer oder sogar überhaupt nicht mehr störend sind. Im Ergebnis wird im Rahmen der Erfindung die geringfügige Verdrehbarkeit der Spannbacken in ihrer Führung im Spannfutter bewußt dazu genutzt, gleichbleibend gute Halterungs- und Führungsverhältnisse für das Werkzeug im Spannfutter über einen größeren Durchmesserbereich des Werkzeugschaftes hinweg zu erreichen.

Im einzelnen empfiehlt es sich, daß der voranlaufende Teil der Führungsfläche mindestens doppelt so breit wie der nachlaufende Teil ist. Tatsächlich kann der nachlaufende Teil der Führungsfläche zugunsten der größeren Breite des vorlaufenden Teils Schmal gehalten werden, da er allenfalls dazu dient, eine Führung des Werkzeugschaftes auch bei rückwärts laufendem Bohrfutter zu bieten, wenn die Drehmomentenübertragung zwischen Werkzeugschaft und Spannbacken ohnehin gering ist und hohe Anlagekräfte zwischen dem Werkzeugschaft und dem hinteren Führungsflächenteil nicht auftreten können. Wenn daher der Rücklauf des Bohrfutters und des Werkzeugs keine Rolle spielt, empfiehlt sich eine Ausführungsform, in der der nachlaufende Führungsflächenteil überhaupt fehlt, der Vorsprung also unmittelbar am in Drehrichtung des Bohrfutters nachlaufenden Rand der Spannbacken endet.

Die Anlageverhältnisse der Spannbackenkante, die den in Drehrichtung vorderen Rand des vorderen Führungsflächenteils bildet, an der Mantelfläche des Werkzeugschaftes kann durch geeignete Profilgestaltungen dieser Spannbackenkante wie auch der Führungsfläche insgesamt weiter verbessert werden. Eine besonders bevorzugte Ausführungsform der Erfindung ist insoweit dadurch gekennzeichnet, daß die Führungsfläche, allenfalls abgesehen von einem in Umfangsrichtung unmittelbar an den Vorsprung anschließenden schmalen Flächenbereich, radial innerhalb oder höchstens in der mit dem Spannfutter achsenparallelen und seinen größten Spanndurchmesser besitzenden kreiszylindrischen Hüllfläche verläuft, wenn diese Hüllfläche die in Umfangsrichtung den vorderen bzw. hinteren Rand der Führungsfläche bildenden Spannbackenkanten schneidet. Dann ist auch bei einem Bohrfutter, bei dem in an sich bekannter Weise der Vorsprung im zur Futterachse senkrechten Querschnitt konvex gewölbt und die Führungsfläche längs eines Kreisbogens konkav gewölbt ist, für jeden im Spannfutter spannbaren Schaftdurchmesser der Wölbungsradius der Führungsfläche immer größer oder allenfalls nur gleich dem Schaftdurchmesser, und die Anlage der Spannbacken mit ihrer Führungsfläche am Werkzeugschaft durch Verdrehen der Spannbacken im Spannfutter findet bis zum größtmöglichen Spanndurchmesser statt. Dabei können die Anlageverhältnisse des vorderen Führungsflächenrandes an der Mantelfläche des Werkzeugschaftes noch dadurch weiter verbessert werden, daß die diesen Rend bildende Spannbackenkante konvex gerundet ist, so daß eine scharfe Kante, die sich in den Werkzeugschaft eingraben und schnell verschleißen könnte, vermieden wird. Im übrigen ermöglicht der Verlauf der Führungsfläche radial innerhalb der genannten Hüllfläche in besonders einfacher Weise eine weitere sehr vorteilhafte Ausführungsform der Erfindung, die dadurch gekennzeichnet ist, daß der voranlaufende Teil der Führungsfläche von einer innerhalb der Hüllfläche verlaufenden ebenen Sekantenfläche gebildet ist. Denn in diesem Fall können, worauf noch zurückzukommen sein wird, am Werkzeugschaft entsprechend ebene, den ebenen Sekantenflächen der Spannbacken zugeordnete und sich ihnen durch die Verdrehbarkeit der Spannbacken plan anlegende Zentrierflächen vorgesehen werden, die bei jedem Durchmesser des Werkzeugschafts innerhalb von dessen Hüllkreis verlaufen und also leicht hergestellt werden können. Soweit dabei die ebene Führungsfläche in der schon erwähnten Weise nur in einem in Umfangsrichtung unmittelbar an den Vorsprung anschließenden schmalen Flächenbereich radial nach außen über den Hüllkreis vorsteht, ist damit kein Nachteil verbunden, weil am Werkzeugschaft der hierfür erforderliche, über den Hüllkreis nach außen vorstehende Werkstoff unmittelbar aus den Ausnehmungen stammen kann, wenn diese Ausnehmungen auch durch Materialverformung und -verdrängung, also nicht nur spanabhebend hergestellt worden sind. Weiter ist aus gleichen Gründen auch der Vorsprung vorzugsweise mit einer an den in Drehrichtung voranlaufenden Teil der Führungsfläche anschließenden ebenen Mitnehmerfläche versehen. Selbstverständlich müssen im übrigen diese Führungsflächen, Zentrierflächen und Mitnehmerflächen im Rahmen der Erfindung nicht unbedingt ebene, sondern können auch in anderer Weise gestaltete Flächen sein, soweit sie nur gleichgestaltet sind und unabhängig vom Schaftdurchmesser des Werkzeugs eine flächige Anlage aneinander ergeben. Denn gerade diese flächige Anlage aneinander bewirkt die entscheidende Verringerung der lokal en den Flächen auftretenden Kräfte, und mindert dadurch die Flächenbelastung an den Führungs- und Zentrierflächen. Soweit der nachlaufende Teil der Führungsfläche fehlt, kann der dann nur noch allein vorhandene voranlaufende Teil der Führungsfläche zweckmäßig zwei im Radius gestuft aneinander grenzende Flächenbereiche aufweisen, nämlich einen inneren, unmittelbar an den Vorsprung angrenzenden Flächenbereich von kleinerem Abstand zur Futterachse und einen in der Stufe davor anschließenden Flächenbereich mit größerem Abstand von der Futterachse. Bei Werkzeugen mit im Durchmesser kleinerem Werkzeugschaft kann dann, wie noch näher erläutert werden wird, nur der innere Flächenbereich die Werkzeugführung übernehmen, bei größerem Schaftdurchmesser auch der vordere, den größeren Abstand zur Futterachse besitzende Flächenbereich, so daß die bei größerem Schaftdurchmesser nötige größere Kraftübertragung zwischen Werkzeugschaft und Spannbacken über eine entsprechend größere Führungsfläche erfolgen kann. - Soweit vorhanden, ist zweckmäßig auch der nachlaufende Teil der Führungsfläche eben, und die in Drehrichtung voranlaufende Mitnehmerfläche sollte etwa parallel zum nachlaufenden Führungsflächenteil verlaufen. Wird daher die Ausnehmung und der daran in Drehrichtung rückwärts anschließende Teil der Mantelfläche des Werkzeugschaftes mit ebenen Flächen ausgestattet, die der Mitnehmerfläche und dem nachlaufenden ebenen Führungsflächenteil entsprechen, so kann sich die Spannbacke infolge ihrer Verdrehbarkeit immer sowohl über die gesamte Führungsfläche als auch über die Mitnehmerfläche den entsprechenden ebenen Flächen des Werkzeugschaftes großflächig anlegen, unabhängig von der jeweiligen Größe des Schaftdurchmessers, so daß eine sehr exakte und dennoch leichtgängige Führung und Mitnahme des Werkzeugschaftes an den Spannbacken erfolgt.

Unter diesen Umständen besteht die Erfindung bezüglich des im Bohrfutter zu haltenden Werkzeuges zunächst darin, daß der Werkzeugschaft in der dem Bohren entsprechenden Drehrichtung vor jeder Ausnehmung eine innerhalb eines Hüllkreises verlaufende ebene Zentrierfläche aufweist, die mit der durch die Achse des Werkzeugschaftes und durch die Kante zwischen der Zentrierfläche und der Ausnehmung gehenden Durchmesserebene einen vom Hüllkreisdurchmesser unabhängigen, stets gleichgroßen Winkel bildet, wobei dieser Winkel der Größe nach gleich dem entsprechenden Winkel im Bohrfutter zwischen dem vorderen Führungsflächenteil und der Durchmesserebene ist, die durch die Futterachse und durch die Kante zwischen dem Vorsprung und dem vorderen Führungsflächenteil geht. Weiter kann bei entsprechender Spannbackengestaltung die Ausnehmung im Werkzeugschaft eine an die Zentrierfläche anschließende ebene Anschlagfläche aufweisen, die unabhängig vom Hüllkreisdurchmesser des Werkzeugschaftes mit der Zentrierfläche einen festen Winkel gleich dem Winkel zwischen dem voranlaufenden ebenen Führungsflächenteil und der ebenen Mitnehmerfläche der Spannbacken einschließt. Und schließlich empfiehlt es sich, wenn an der Spannbacke auch der nachlaufende Führungsflächenteil eben ist, daß der Werkzeugschaft auch hinter jeder Ausnehmung einen ebenen Zentrierflächenteil aufweist, der innerhalb des Hüllkreises verläuft und mit der vor der Ausnehmung liegenden Zentrierfläche einen vom Hüllkreisdurchmesser unabhängigen Winkel gleich dem Winkel zwischen beiden Führungsflächenteilen der Spannbacken einschließt. Dabei können, wie entsprechend bei der Spannbacke, die ebene Anschlagfläche und der hintere ebene Zentrierflächenteil etwa parallel zueinander verlaufen.

Soweit bei den Spannbacken die nachlaufende Führungsfläche fehlt und die voranlaufende Führungsfläche die zwei abgestuften Flächenbereiche aufweist, empfiehlt sich bezüglich des Werkzeugs bei großem Schaftdurchmesser, daß der Werkzeugschaft in der dem Bohren entsprechenden Drehrichtung vor jeder Ausnehmung eine vertieft innerhalb seines Hüllkreises liegende Aussparung aufweist, deren Boden zur Anlage der Spannbacke mit ihrem Flächenbereich von kleinerem Abstand zur Futterachse ausgebildet ist, und daß die in Drehrichtung vor dieser Aussparung liegende und im wesentlichen im Hüllkreis verlaufende Mantelfläche des Werkzeugschaftes die Auflage bildet für den an die Stufe anschließenden vorderen Flächenbereich der Spannbacke mit größerem Abstand zur Futterachse. Beide Flächenbereiche können dann gleichermaßen zur Führung des Werkzeugs beitragen. Bei kleinem Schaftdurchmesser genügt dagegen die Führung des Werkzeugs allein am inneren Flächenbereich der Führungsfläche, so daß für diesen Fall von den Aussparungen abgesehen werden kann.

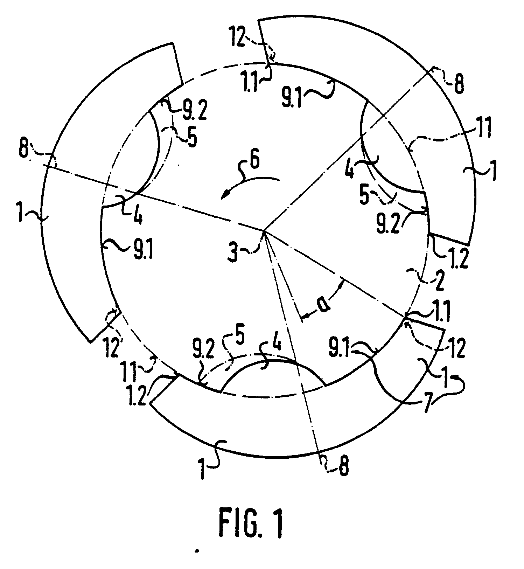

Im folgenden wird die Erfindung an in der Zeichnung schematisch dargestellten Ausführungsbeispielen näher erläutert; es zeigen in jeweils nur schematisch dargestellten Querschnitten senkrecht zur Futterachse unter Wiedergabe jeweils nur des Werkzeugschaftes und der Spannbacken des Spannfutters die Fig. 1 bis 5 verschiedene Ausführungsbeispiele des erfindungsgemäßen Spannfutters und Werkzeuges.

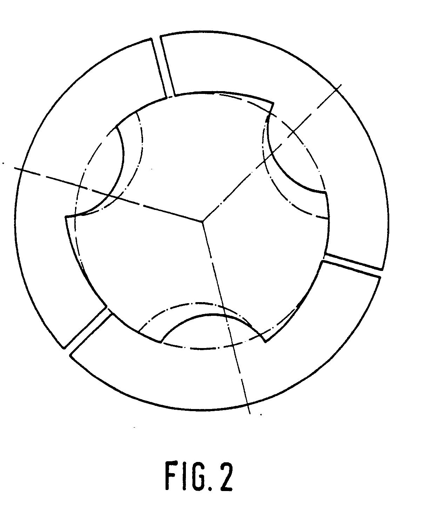

In der Zeichnung sind die Spannbacken des Bohrfutters mit 1 und der Werkzeugschaft des zum drehenden und drehschlagenden Bohren dienenden Werkzeuges mit 2 bezeichnet. Das Spannfutter besitzt in allen Ausführungsbeispielen drei zentrisch zur Futterachse 3 verstellbare Spannbacken 1, deren der Futterachse 3 zugewandte Spannfläche eine der Führung des Werkzeugschaftes 2 an seiner Mantelfläche dienende Führungsfläche und einen gegen die Futterachse 3 aus der Führungsfläche vorstehenden Vorsprung 4 aufweist, der durch Eingriff in eine Ausnehmung 5 am Werkzeugschaft 2 der drehenden Mitnahme und axialen Spielbegrenzung des Werkzeuges dient, wozu - was aus der Zeichnung nicht erkennbar ist, - wenigstens eine der Ausnehmungen 5 axial zum futterseitigen Schaftende hin geschlossen ist, so daß der Vorsprung 4 an diesem Ende der Ausnehmung 5 einen Anschlag gegen axiales Herausfallen des Werkzeugs aus dem Spannfutter bildet. Die dem Bohren entsprechende Drehrichtung des Spannfutters ist in Fig. 1 durch den Pfeil 6 gekennzeichnet. Das dabei zwischen den Spannbacken 1 und dem Werkzeugschaft 2 zu übertragende Drehmoment führt an den Spannbacken 1 selbst zu einem Drehmoment, das die Spannbacken in ihrer jeweiligen Führung im Spannfutter in einer durch den Doppelpfeil 7 in Fig. 1 angedeuteten Weise zu verdrehen versucht, nämlich mit dem in Drehrichtung des Spannfutters voranlaufenden Rand 1.1 radial einwärts und mit dem nachlaufenden Rand 1.2 radial auswärts, so daß die aus Fig. 2 ersichtliche Backenstellung entsteht, wenn im Vergleich zu Fig. 1 der Durchmesser des Werkzeugschaftes 2 geringer ist. In Fig. 1 ist dabei ein Werkzeugschaft 2 mit dem größten im Spannfutter spannbaren Durchmesser, in Fig. 2 mit dem kleinsten Spanndurchmesser dargestellt.

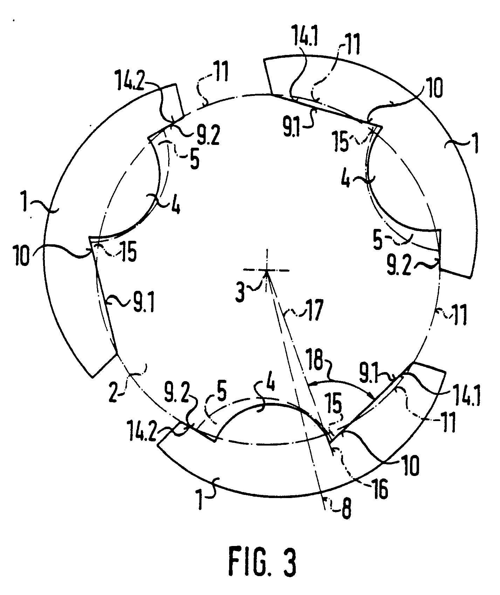

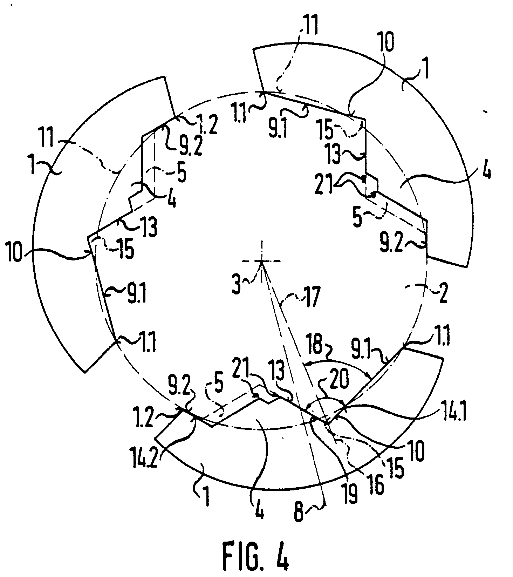

In allen Fällen ist der Vorsprung 4 entgegen der dem Bohren dienenden Drehrichtung des Spannfutters, also entgegen dem Pfeil 6, aus der durch die Futterachse 3 gehenden Mittelebene 8 der Spannbacke 1 versetzt. Der dem Vorsprung 4 in Drehrichtung voranlaufende Teil 9.1 der Führungsfläche ist in Umfangsrichtung des Werkzeugschaftes 2 also breiter als der dem Vorsprung 4 nachlaufende Führungsflächenteil 9.2, und zwar in allen Ausführungsbeispielen mindestens doppelt so breit, wobei in Fig. 1 diese Breite durch den Winkel a angedeutet ist. Weiter ist allen Ausführungsbeispielen gemeinsam, daß die Führungsfläche 9.1, 9.2, allenfalls abgesehen von einem in Umfangsrichtung unmittelbar an den Vorsprung 4 anschließenden schmalen Flächenbereich 10, radial innerhalb oder höchstens in der mit dem Spannfutter achsenparallelen und seinen größten Spanndurchmesser besitzenden kreiszylindrischen Hüllfläche 11 verläuft, die jedenfalls in Fig. 1 mit der Mantelfläche des Bohrerschaftes 2 übereinstimmt, wenn diese Hüllfläche 11 die in Umfangsrichtung den vorderen und hinteren Rand der Führungsfläche bildenden Spannbackenkanten 1.1, 1.2 schneidet. Der Verlauf der Führungsflächenteile 9.1, 9.2 radial innerhalb des Hüllkreises 11 hat zur Folge, daß in den Fig. 3 und 4 die diesen Führungsflächenteilen anliegenden Teile der entsprechenden Zentrierflächen 14.1, 14.2 am Werkzeugschaft 2 ebenfalls immer innerhalb seinem Hüllkreis liegen, also leicht durch Werkstoffabnahme hergestellt werden können. Der radiale Werkstoffüberstand 15 über den Hüllkreis 11 in den Bereichen 10 der vorderen und gegebenenfalls auch der hinteren Führungsflächenteile 9.1, 9.2 ist ohne Nachteil, da die dafür benötigte Werkstoffansammlung durch eine drückende Bearbeitung des Werkzeugschaftes 2 aus seinen Ausnehmungen 5 verdrängt worden sein kann.

Im Ausführungsbeispiel nach den Fig. 1 und 2 ist der Vorsprung 4 im zur Futterachse 3 senkrechten Querschnitt konvex gewölbt und die Führungsfläche 9.1, 9.2 längs eines Kreisbogens konkav gewölbt. Dabei kann die den vorderen Rand des vorderen Führungsflächenteils 9.1 bildende Spannbackenkante 1.1 im Querschnitt konvex gerundet sein, wie dies bei 12 in Fig. 1 angedeutet ist. In den Ausführungsbeispielen nach den Fig. 3 und 4 ist dagegen der voranlaufende Teil 9.1 der Führungsfläche von einer innerhalb der Hüllfläche 11 verlaufenden ebenen Sekantenfläche gebildet, wobei hier die Hüllfläche 11 nicht unbedingt auch zugleich die Mantelfläche des Werkzeugschaftes 2 mit dem größtmöglichen Spanndurchmesser darstellen muß. Auch der nachlaufende Teil 9.2 der Führungsfläche ist eben, und schließlich ist beim Ausführungsbeispiel nach Fig. 4 auch der Vorsprung 4 mit einer an den in Drehrichtung voranlaufenden Teil 9.1 der Führungsfläche anschließenden ebenen Mitnehmerfläche 13 versehen. Diese Mitnehmerfläche 13 verläuft etws parallel zum nachlaufenden Führungsflächenteil 9.2. Der Werkzeugschaft 2 besitzt bei diesen Ausführungsbeispielen in der dem Bohren entsprechenden Drehrichtung vor jeder Ausnehmung 5 die schon erwähnte, innerhalb seines Hüllkreises 11 verlaufende ebene Zentrierfläche 14.1, die mit der durch die Achse des Werkzeugschaftes 2 und durch die Kante 16 zwischen der Zentrierfläche 14.1 und der Ausnehmung 5 gehenden Durchmesserebene 17 einen vom Hüllkreisdurchmesser unabhängigen, stets gleich großen Winkel 18 bildet, der mit dem entsprechenden Winkel an der Spannbacke 1 übereinstimmt. Die Ausnehmung 5 besitzt in Fig.

4 eine an die Zentrierfläche 14.1 anschließende ebene Anschlagfläche 19, die unabhängig vom Hüllkreisdurchmesser des Werkzeugschaftes 2 mit der Zentrierfläche 14.1 einen festen Winkel 20 gleich dem Winkel zwischen dem voranlaufenden ebenen Führungsflächenteil 9.1 und der ebenen Mitnehmerfläche 13 der Spannbacke 1 ist. Und schließlich ist in den Fig. 3 und 4 der Werkzeugschaft 2 auch hinter jeder Ausnehmung 5 mit einem ebenen Zentrierflächenteil 14.2 versehen, der innerhalb des Hüllkreises 11 verläuft und mit der vor der Ausnehmung 5 liegenden Zentrierfläche 14.1 einen vom Durchmesser des Hüllkreises 11 unabhängigen Winkel gleich dem Winkel zwischen beiden Führungsflächenteilen 9.1, 9.2 der Spannbacken 1 einschließt. Auch beim Werkzeug 2 verläuft die ebene Anschlagfläche 19 im wesentlichen parallel zum hinteren ebenen Zentrierflächenteil 14.2.

Die bauartbedingte geringfügige Drehbarkeit der Spannbacken 1 in ihrer Führung im Spannfutter ermöglicht es, daß sich die Spannbacken 1 mit ihren Führungsflächenteilen 9.1, 9.2 und gegebenenfalls auch der Mitnehmerfläche 13 den entsprechenden Zentrierflächenteilen 14.1, 14.2 und der Anschlagfläche 19 am Werkzeugschaft 2 überall flächig anlegen können, so daß die lokalen Kraftbeanspruchungen in diesen aneinander liegenden Flächen klein sind und dadurch eine sehr zuverlässige, wegen der geringen Flächenpressung aber gleichzeitig leichtgängige Führung und Zentrierung des Werkzeugschaftes 2 an den Spannbacken 1 ergeben. Verschleißerscheinungen am Werkzeugschaft 2 bzw. an den Spannbacken 1 werden praktisch vermieden. Im Ausführungsbeispiel nach den Fig. 1 und 2 ermöglicht die Verdrehbarkeit der Spannbacken 1 die Anlage ihrer in Drehrichtung voranlaufenden Spannbackenkanten 1.1 an der Mantelfläche des Werkzeugschaftes 2 entsprechend Fig. 2, wodurch ebenfalls die Führung und Zentrierung des Werkzeugschaftes 2 im Spannfutter bei kleineren Spanndurchmessern wesentlich besser erhalten bleibt, als wenn bei diesen kleineren Spanndurchmessern die Führung und Zentrierung des Werkzeugschaftes 2 nur noch durch die in seine Ausnehmungen 5 eingreifenden Vorsprünge 4 der Spannbacken 1 erfolgte.

Zum Spannen von Werkzeugen mit rein zylindrischem ungenutetem Schaft können die Vorsprünge 4 auch eine oder mehrere Spannschneiden 21 aufweisen.

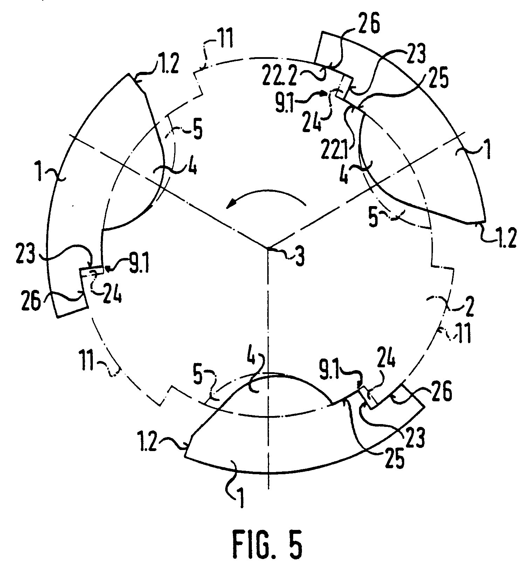

In der Fig. 5 ist ein Ausführungsbeispiel gezeigt, bei dem der nachlaufende Führungsflächenteil 9.2 der Spannbacken 1 überhaupt fehlt und der Vorsprung 4 unmittelbar an dem in Drehrichtung des Bohrfutters nachlaufenden Rand 1.2 der Spannbacken endet. Der nur noch allein vorhandene voranlaufende Führungsflächenteil 9.1 besteht aus zwei im Radius gestuft und in der Stufe 23 in Umfangsrichtung aneinander grenzenden Flächenbereichen 22.1, 22.2. Der innere, nämlich unmittelbar an den Vorsprung 4 anschließende Flächenbereich 22.1 besitzt kleineren Abstand zur Futterachse 3 als der in der Stufe 23 daran anschließende vordere Flächenbereich 22.2. Der Werkzeugschaft 2 ist in der dem Bohren entsprechenden Drehrichtung vor jeder Ausnehmung 5 mit einer um die Höhe der Stufe 23 vertieft innerhalb seines Hüllkreises 11 liegenden Aussparung 24 versehen, deren Boden 25 als Anlagefläche für die Spannbacke 1 mit ihrem inneren Flächenbereich 22.1 ausgebildet ist.

Die bei 26 in Drehrichtung vor dieser Aussparung 24 liegende und im Hüllkreis 11 verlaufende Mantelfläche des Werkzeugschaftes 2 bildet die Auflage für den vorderen Flächenbereich 22.2 der Spannbacke. Im Ergebnis kommt der gesamte Führungsflächenteil 9.2 am Werkzeugschaft zum Tragen. Dies muß bei Werkzeugschäften geringeren Durchmessers nicht mehr unbedingt der Fall sein. Bei ihnen kann daher auf die Aussparung 24 verzichtet werden, so daß nicht mehr der vordere Flächenbereich 22.2 sondern nur noch der innere Flächenbereich 22.1 an der dann bis auf die Ausnehmungen 5 praktisch überall im Hüllkreis 11 verlaufenden Mantelfläche des Werkzeugschaftes 2 anliegt.

## Patentansprüche

1. Bohrfutter für ein Werkzeug zum drehenden und drehschlagenden Bohren, mit mindestens zwei in zur Futterachse schrägen Führungen zentrisch zur Futterachse verstellbaren und in ihren Führungen begrenzt verdrehbaren Spannbacken (1), deren der Futterachse (3) zugewandte Spannfläche eine der Führung des Werkzeugschaftes (2) an seiner Mantelfläche dienende Führungsfläche (9.1, 9.2) und mindestens einen gegen die Futterachse (3) aus der Führungsfläche vorstehenden Vorsprung (4) aufweist, der durch Eingriff in Ausnehmungen (5) am Werkzeugschaft (2) der drehenden Mitnahme und axialen Spielbegrenzung des Werkzeuges dient, dadurch gekennzeichnet, daß der Vorsprung (4) entgegen der dem Bohren dienenden Drehrichtung des Spannfutters aus der durch die Futterachse (3) gehenden Mittelebene (8) der Spannbacke (1) versetzt ist, so daß der dem Vorsprung (4) in Drehrichtung voranlaufende Teil (9.1) der Führungsfläche in Umfangsrichtung des Werkzeugschaftes (2) breiter ist als der dem Vorsprung (4) nachlaufende Führungsflächenteil (9.2).

2. Bohrfutter nach Anspruch 1, dadurch gekennzeichnet, daß der voranlaufende Teil (9.1) der Führungsfläche mindestens doppelt so breit wie der nachlaufende Teil (9.2) ist.

3. Bohrfutter nach Anspruch 1, dadurch gekennzeichnet, daß der nachlaufende Führungsflächenteil (9.2) überhaupt fehlt, der Vorsprung (4) also unmittelbar am in Drehrichtung des Bohrfutters nachlaufenden Rand (1.2) der Spannbacken (1) endet.

4. Bohrfutter nach einem der Ansprüche 1 bis 3, dadurch gekennzeichnet, daß die Führungsfläche (9.1, 9.2), allenfalls abgesehen von einem in Umfangsrichtung unmittelbar an den Vorsprung (4) anschließenden schmalen Flächenbereich (10), radial innerhalb oder höchstens in der mit dem Spannfutter achsenparallelen und seinen größten Spanndurchmesser besitzenden kreiszylindrischen Hüllfläche (11) verläuft, wenn diese Hüllfläche (11) die in Umfangsrichtung den vorderen bzw. hinteren Rand der Führungsfläche (9.1, 9.2) bildenden Spannbackenkanten (1.1, 1.2) schneidet.

5. Bohrfutter nach Anspruch 4, dadurch gekennzeichnet, daß der Vorsprung (4) im zur Futterachse (3) senkrechten Querschnitt konvex gewölbt und die Führungsfläche (9.1, 9.2) längs eines Kreisbogens konkav gewölbt ist, und daß die den vorderen Rand des vorderen Führungsflächenteils (9.1) bildende Spannbackenkante (1.1) im Querschnitt konvex gerundet ist.

6. Bohrfutter nach Anspruch 4, dadurch gekennzeichnet, daß der voranlaufende Teil (9.1) der Führungsfläche von einer innerhalb der Hüllfläche (11) verlaufenden ebenen Sekantenfläche gebildet ist.

7. Bohrfutter nach Anspruch 6, dadurch gekennzeichnet, daß der Vorsprung (4) eine an den in Drehrichtung voranlaufenden Teil (9.1) der Führungsfläche anschließende ebene Mitnehmerfläche (13) aufweist.

8. Bohrfutter nach einem der Ansprüche 4 bis 7, dadurch gekennzeichnet, daß der nur allein vorhandene voranlaufende Führungsflächenteil (9.1) zwei im Radius gestuft aneinander grenzende Flächenbereiche (22.1, 22.2) aufweist, nämlich einen inneren, unmittelbar an den Vorsprung (4) angrenzenden Flächenbereich (22.1) von kleinerem Abstand zur Futterachse (3) und einem in der Stufe (23) davor anschließenden Flächenbereich (22.2) mit größerem Abstand von der Futterachse (3).

9. Bohrfutter nach Anspruch 6 oder 7, dadurch gekennzeichnet, daß auch der nachlaufende Teil (9.2) der Führungsfläche eben ist.

10. Bohrfutter nach den Ansprüchen 7 und 9, dadurch gekennzeichnet, daß die Mitnehmerfläche (13) etwa parallel zum nachlaufenden Führungsflächenteil (9.2) verläuft.

11. Werkzeug für ein Bohrfutter nach Anspruch 8, dadurch gekennzeichnet, daß der Werkzeugschaft (2) in der dem Bohren entsprechenden Drehrichtung vor jeder Ausnehmung (5) eine vertieft innerhalb seines Hüllkreises (11) liegende Aussparung (24) aufweist, deren Bodenfläche zur Anlage der Spannbacke (1) mit ihrem Flächenbereich (22.1) von kleinerem Abstand zur Futterachse (3) ausgebildet ist, und daß die in Drehrichtung vor dieser Aussparung liegende und im wesentlichen im Hüllkreis (11) verlaufende Mantelfläche des Werkzeugschaftes (2) die Auflage bildet für den an die Stufe (23) anschließenden Flächenbereich (22.2) der Spannbacke (1) mit größerem Abstand zur Futterachse (3).

12. Werkzeug für ein Bohrfutter nach den Ansprüchen 6 bis 11, dadurch gekennzeichnet, daß der Werkzeugschaft (2) in der dem Bohren entsprechenden Drehrichtung vor jeder Ausnehmung (5) eine innerhalb seines Hüllkreises (11) verlaufede ebene Zentrierfläche (14.1) aufweist, die mit der durch die Achse des Werkzeugschaftes (2) und durch die Kante (16) zwischen der Zentrierfläche (14.1) und der Ausnehmung (5) gehenden Durchmesserebene (17) einen vom Hüllkreisdurchmesser unabhängigen, stets gleichgroßen Winkel (18) bildet.

13. Werkzeug nach Anspruch 12, dadurch gekennzeichnet, daß die Ausnehmung (5) eine an die Zentrierfläche (14.1) anschließende ebene Anschlagfläche (19) aufweist, die unabhängig vom Hüllkreisdurchmesser des Werkzeugschaftes (2) mit der Zentrierfläche (14.1) einen festen Winkel (20) gleich dem Winkel zwischen dem voranlaufenden ebenen Führungsflächenteil (9.1) und der ebenen Mitnehmerfläche (13) der Spannbacken (1) ist.

14. Werkzeug nach Anspruch 12 oder 13, dadurch gekennzeichnet, daß der Werkzeugschaft (2) auch hinter jeder Ausnehmung (5) einen ebenen Zentrierflächenteil (14.2) aufweist, der innerhalb des Hüllkreises (11) verläuft und mit der vor der Ausnehmung (5) liegenden Zentrierfläche (14.1) einen vom Hüllkreisdurchmesser unabhängigen Winkel gleich dem Winkel zwischen beiden Führungsflächenteilen (9.1, 9.2) der Spannbacken (1) einschließt.

15. Werkzeug nach den Ansprüchen 13 und 14, dadurch gekennzeichnet, daß die ebene Anschlagfläche (19) und der hintere ebene Zentrierflächenteil (9.2) etwa parallel zueinander verlaufen.

## Claims

1. Drill chuck for a tool for turning and rotary percussive drilling, with at least two clamping jaws (1) which, in guideways oblique to the chuck axis, are adjustable centrally to the chuck axis and are rotatably to a limited extent in their guideways, the gripping surface of which clamping jaws, facing the chuck axis (3) has a guide surface (9.1, 9.2) serving to guide the shank (2) of the tool on its surface, and has at least one projection (4) projecting towards the chuck axis (3) from che guide surface, which projection, through engagement in recesses (5) on the tool shank (2), serves for rotating take-up and axial play limitation of the tool, characterized in that the projection (4) is staggered contrary to the direction of rotation of the clamping chuck, serving for drilling, from the central plane (8) of the clamping jaw (1) passing through the chuck axis (3), so that the part (9.1) of the guide surface, which runs ahead of the projection (4) in the direction of rotation, is wider in the circumferential direction of the tool shank (2) than the part (9.2) of the guide surface which follows the projection (4).

2. Drill chuck according to Claim 1, characterized in that the part (9.1) of the guide surface which runs ahead is at least twice as wide as the part (9.2) which follows.

3. Drill chuck according to Claim 1, characterized in that the part (9.2) of the guide surface which follows is entirely missing, and the projection (4) therefore ends directly at the edge (1.2) of the clamping jaws (1) which follows in rotational direction of the drill chuck.

4. Drill chuck according to one of Claims 1 to 3, characterized in that the guide surface (9.1, 9.2), at all events apart from a narrow surface region (10) directly adjoining the projection (4) in circumferential direction, runs radially within or at the most in the circular cylindrical covering surface (11), axis-parallel to the clamping chuck and having its greatest clamping diameter, when this covering surface (11) intersects the clamping jaw edges (1.1, 1.2) which form in circumferential direction the front or respectively rear edge of the guide surface (9.1, 9.2).

5. Drill chuck according to Claim 4, characterized in that the projection (4) is curved in a convex manner in cross-section vertical to the chuck axis (3) and the guide surface (9.1, 9.2) is curved in a concave manner along a circular arc, and that the clamping jaw edge (1.1) forming the front edge of the front guide surface part (9.1) is rounded in a convex manner in cross-section.

6. Drill chuck according to Claim 4, characterized in that the part (9.1) of the guide surface which runs ahead is formed by a flat secant surface running inside the covering surface (11).

7. Drill chuck according to Claim 6, characterized in that the projection (4) has a flat carrier surface (13) adjoining the part (9.1) of the guide surface which runs ahead in the direction of rotation.

8. Drill chuck according to one of claims 4 to 7, characterized in that the part (9.1) of the guide surface which runs ahead and is only present on its own, has two surface regions (22.1, 22.2) adjacent to each other and graduated in their radius, namely an inner surface region (22.1) immediately adjoining the projection (4) and with a smaller distance from the chuck axis (3), and in the step (23) adjoining in front of it a surface region (22.2) with a greater distance from the chuck axis (3).

9. Drill chuck according to Claim 6 or 7, characterized in that the part (9.2) of the guide surface which follows is also flat.

10. Drill chuck according to claims 7 and 9, characterized in that the carrier surface (13) runs approximately parallel to the part (9.2) of the guide surface which follows.

11. Tool for a drill chuck according to Claim 8, characterized in that the tool shank (2), in the direction of rotation corresponding to drilling, in front of each recess (5), has a cutout (24) lying sunken within its covering circle (11), the base surface of which cutout, for the clamping jaw (1) to lie against it, with its surface region (22.1) is constructed with a smaller distance from the chuck axis (3), and that the surface of the tool shank (2) lying in front of this cut-out in the direction of rotation and running substantially in the covering circle (11), forms the support for the surface region (22.2) of the clamping jaw (1) adjoining the step (23), with a greater distance from the chuck axis (3).

12. Tool for a drill chuck according to claims 6 to 11, characterized in that the tool shank (2), in the direction of rotation corresponding to drilling, in front of each recess (5) has a flat centering surface (14.1) running within its covering circle (11), which centering surface, with the diameter plane (17) which passes through the axis of the tool shank (2) and through the edge (16) between the centering surface (14.1) and the recess (5), forms an angle (18) which is independent of the diameter of the covering circle and is always of equal size.

13. Tool according to Claim 12, characterized in that the recess (5) has a flat stop surface (19) adjoining the centering surface (14.1), which stop surface, independently of the covering circle diameter of the tool shank (2), forms a fixed angle (20) with the centering surface (14.1), which angle is identical to the angle between the flat part (9.1) of the guide surface which runs ahead and the flat carrier surface (13) of the clamping jaws (1).

14. Tool according to Claim 12 or 13, characterized in that the tool shank (2) also has a flat centering surface part (14.2) behind each recess (5), which flat centering surface part runs inside the covering circle (11) and forms an angle with the centering surface (14.1) lying in front of the recess (5) which is independent of the covering circle diameter and is identical to the angle between the two guide surface parts (9.1. 9.2) of the clamping jaws (1).

15. Tool according to Claims 13 and 14, characterized in that the flat stop surface (19) and the rear flat centering surface part (9.2) run approximately parallel to each other.

**Revendications**

1. Mandrin de serrage pour un outil de perçage à rotation et à roto-percussion, comprenant au moins deux mâchoires de serrage (1) déplaçables concentriquement à l'axe du mandrin dans des guidages inclinés par rapport à l'axe du mandrin et pouvant être tournées de manière limitée dans leurs guidages, dont la surface de serrage dirigée vers l'axe du mandrin (3) présente une surface de guidage (9.1, 9.2) servant au guidage de la tige (2) de l'outil sur sa surface latérale et au moins une saillie (4) qui dépasse de la surface de guidage en direction de l'axe du mandrin (3) et qui, par engagement dans des évidements (5) sur la tige (2) de l'outil, sert à l'entraînement en rotation et à la limitation du jeu axial de l'outil, caractérisé par le fait que la saillie (4) est décalée par rapport au plan médian (8) de la mâchoire de serrage (1) passant par l'axe du mandrin (3), dans la direction opposée au sens de rotation du mandrin de serrage correspondant au perçage, de sorte que la section (9.1) de la surface de guidage située dans le sens de rotation en avant de la saillie (4) est plus large dans le sens circonférentiel de la tige (2) de l'outil que la section de la surface de guidage (9.2) située en arrière de la saillie (4).

2. Mandrin de serrage selon la revendication 1, caractérisé par le fait que la section antérieure (9.1) de la surface de guidage est au moins deux fois plus large que la section postérieure (9.2).

3. Mandrin de serrage selon la revendication 1, caractérisé par le fait que la section postérieure (9.2) de la surface de guidage manque complètement, c'est-à-dire que la saillie (4) se termine directement au bord (1.2) des mâchoires de serrage (1) situé en arrière dans le sens de rotation du mandrin de serrage.

4. Mandrin de serrage selon l'une quelconque des revendications 1 à 3, caractérisé par le fait que la surface de guidage (9.1, 9.2), abstraction faite éventuellement d'une étroite section de surface (10) directement rattachée dans le sens circonférentiel à la saillie (4), s'étend radialement à l'intérieur ou tout au plus dans la surface enveloppante cylindrique circulaire (11) disposée parallèlement à l'axe du mandrin de serrage et présentant le plus grand diamètre de serrage de celui-ci, lorsque cette surface enveloppante (11) coupe les arêtes (1.1, 1.2) des mâchoires de serrage qui forment, dans le sens circonférentiel, le bord antérieur et respectivement postérieur de la surface de guidage (9.1, 9.2).

5. Mandrin de serrage selon la revendication 4, caractérisé par le fait que la saillie (4) présente, en coupe perpendiculaire à l'axe du mandrin (3), une courbure convexe et que la surface de guidage (9.1, 9.2) présente une courbure concave le long d'un arc de cercle, et que l'arête (1.1) de la mâchoire de serrage formant le bord avant de la section antérieure (9.1) de la surface de guidage présente, en section transversale, une courbure convexe.

6. Mandrin de serrage selon la revendication 4, caractérisé par le fait que la section antérieure (9.1) de la surface de guidage est constituée par une surface de sécante plane qui s'étend à l'intérieur de la surface enveloppante (11).

7. Mandrin de serrage selon la revendication 6, caractérisé par le fait que la saillie (4) est munie d'une surface d'entraînement (13) plane qui, dans le sens de rotation, fait suite à la section antérieure (9.1) de la surface de guidage.

8. Mandrin de serrage selon l'une quelconque des revendications 4 à 7, caractérisé par le fait que la section antérieure (9.1) de la surface de guidage subsistant seule se compose de deux sections de surface (22.1, 22.2) étagées quant aux rayons et raccordées l'une à l'autre, à savoir une section de surface intérieure (22.1) directement raccordée à la saillie (4) et se trouvant à une distance plus faible de l'axe du mandrin (3) et une section de surface (22.2) qui y est rattachée, en avant de celle-ci, dans un gradin (23) et présente une distance plus grande par rapport à l'axe du mandrin (3).

9. Mandrin de serrage selon l'une des revendications 6 ou 7, caractérisé par le fait que la section postérieure (9.2) de la surface de guidage est également plane.

10. Mandrin de serrage selon l'une des revendications 7 et 9, caractérisé par le fait que la surface d'entraînement (13) est à peu près parallèle à la section postérieure (9.2) de la surface de guidage.

11. Outil pour un mandrin de serrage selon la revendication 8, caractérisé par le fait que la tige (2) de l'outil comporte en avant de chaque évidement (5), dans le sens de rotation correspondant au perçage, un évidement (24) situé en retrait, à l'intérieur de son cercle enveloppant (11), dont le fond est conformé en surface de contact pour la section de surface (22.1) de la mâchoire de serrage (1) qui se trouve à une distance plus faible de l'axe du mandrin (3), et que la surface latérale de la tige (2) de l'outil qui, dans le sens de rotation, se situe en avant de cet évidement et sensiblement à l'intérieur du cercle enveloppant (11) constitue l'appui pour la section de surface (22.2) de la mâchoire de serrage (1) raccordée au gradin (23) et présentant une distance plus grande par rapport à l'axe du mandrin (3).

12. Outil pour un mandrin de serrage selon l'une quelconque des revendications 6 à 11, caractérisé par le fait que la tige (2) de l'outil comporte, dans le sens de rotation correspondant au perçage, en avant de chaque évidement (5), une surface de centrage plane (14.1) qui s'étend à l'intérieur de son cercle enveloppant (11) et forme avec le plan diamétral (17) passant par l'axe de la tige (2) de l'outil et par l'arête (16) entre la surface de centrage (14.1) et l'évidement (5) un angle (18) toujours constant et indépendant du diamètre du cercle enveloppant.

13. Outil selon la revendication 12, caractérisé par le fait que l'évidement (5) présente une surface d'arrêt plane (19) qui se raccorde à la surface de centrage (14.1) et qui, indépendamment du diamètre du cercle enveloppant de la tige (2) de l'outil, renferme avec la surface de centrage (14.1) un angle fixe (20) lequel est égal à l'angle entre la section antérieure plane (9.1) de la surface de guidage et la surface d'entraînement plane (13) des mâchoires de serrage (1).

14. Outil selon l'une des revendications 12 ou 13, caractérisé par le fait que la tige (2) de l'outil est également pourvue, en arrière de chaque évidement (5), d'une section de surface de centrage plane (14.2) qui s'étend à l'intérieur du cercle enveloppant (11) et qui renferme avec la surface de centrage (14.1) située en avant de l'évidement (5) un angle qui, indépendamment du diamètre du cercle enveloppant, est égal à l'angle entre les deux sections de surface de guidage (9.1, 9.2) des mâchoires de serrage (1).

15. Outil selon l'une des revendications 13 et 14, caractérisé par le fait que la surface d'arrêt plane (19) et la section postérieure plane (9.2) de la surface de centrale sont sensiblement parallèles.

FIG. 1

FIG. 2

FIG. 3

FIG. 4

FIG. 5